# EUROPEAN PATENT SPECIFICATION

(11) **EP 3 912 149 B1**
(45) Date of publication and mention of the grant of the patent: **12.11.2025**
(21) Application number: 20741437.6
(22) Date of filing: 16.01.2020
(51) Int. Cl.: H04N 23/56

(54) **METHOD AND SYSTEM FOR MONITORING A PERSON USING INFRARED AND VISIBLE LIGHT**
VERFAHREN UND SYSTEM ZUR ÜBERWACHUNG EINER PERSON MIT INFRAROTLICHT UND SICHTBAREM LICHT
PROCÉDÉ ET SYSTÈME DE SURVEILLANCE D'UNE PERSONNE À L'AIDE DE LUMIÈRE INFRAROUGE ET DE LUMIÈRE VISIBLE

(30) Priority: 17.01.2019 US 201962793390 P
(43) Date of publication of application: 24.11.2021
(73) Proprietor: Jungo Connectivity Ltd., 4250711 Netanya (IL)
(72) Inventor: HERBST, Ophir, 4624522 Herzliya (IL)
(74) Representative: Marks & Clerk LLP
(86) International application number: PCT/IB2020/050342
(87) International publication number: WO 2020/148697

(56) References cited:
- EP-A1- 3 291 191
- EP-A1- 3 358 547
- CN-A- 104 881 955
- US-A1- 2008 080 748
- US-A1- 2014 139 655
- US-A1- 2015 328 985
- US-B1- 6 220 706
- US-B1- 6 940 545

## Description

### FIELD

The invention relates to the field of monitoring a vehicle cabin and, in particular, a driver and a passenger.

### BACKGROUND

Human error has been cited as a primary cause or contributing factor in disasters and accidents in many and diverse industries and fields. For example, traffic accidents involving vehicles are often attributed to human error and are one of the leading causes of injury and death in many developed countries. Similarly, it was found that distraction (e.g., mental distraction) of a worker affects performance at work and is one of the causes of workplace accidents.

Therefore, monitoring human operators, such as workers or drivers of vehicles, is an important component of accident analysis and prevention.

Image based systems are used to monitor human operators, such as drivers. Typically, these systems use infrared or near-infrared (IR) illumination and an infrared camera positioned on a vehicle's steering column, to enable capturing reflection of light coming from the eyes of the driver and to monitor the driver's state based on features of the eye, such as scleral and corneal reflection and pupil parameters.

Image based eye tracking typically requires a high resolution camera to be located very close to a person's eye (e.g., head mounted glasses or headsets). Image sensors located further away (e.g., ~40cm-120cm) typically require IR illumination to capture corneal reflection. These systems calculate or estimate the eye gaze direction from reflection coming from the eyes and based on the geometry between the person's eye, the IR illumination source and image sensor. Thus, the position of the illumination source and image sensor is usually limited, and the system can typically only track the eyes of a single person.

Some additional problems associated with these systems include low light images (since the image sensor can catch typically only about 8-12% of IR light) and reflections from glasses/sunglasses due to the IR illumination. Additionally, the use of a high resolution camera and many IR LEDs gives rise to high cost, high power consumption and possible heating issues of the system. Additionally, the use of many IR LEDs may pose potential eye safety issues, due to the high amount of IR illumination used. The use of IR illumination limits the use of these systems to dark environments and to short distance imaging because, in the IR light, objects at a far distance will not be visible.

EP 3358547 A1 relates to an information processing apparatus, which includes a detection unit for detecting a target object from an input image, an estimation input for estimating a posture of the detected target object and a judgement unit for judging the possibility of the target object slipping on the basis of the estimated posture.

US 2014/139655 A1 discloses vehicle telematics device for driver monitoring for accident avoidance for drowsiness and distraction conditions. The distraction and drowsiness is detected by facial processing of driver's face and pose tracking as a function of speed and maximum allowed travel distance, and issuing a driver alert when a drowsiness or distraction condition is detected. The mitigation includes audible alert, as well as other methods such as dim blue night to perk up the driver. Adaptation center of driver's gaze direction and allowed maximum time for a given driver and camera angle offset as well as temporary offset for cornering for shift of vanishing point and other conditions is also performed.

### SUMMARY

According to aspects of the present invention there is provided a system and method for monitoring a vehicle cabin, as set out by the appended set of claims. Embodiments of the invention provide systems and methods that enable accurate face and eye tracking from a distance (e.g., ~40cm-~5mr) without requiring constant IR illumination. IR illumination is used only in low lighting conditions or when sunglasses penetration is needed.

Thus, face and eye tracking, according to embodiments of the invention, utilize reduced IR illumination, providing a cost-effective system with lower power consumption, fewer heating issues and considerably less safety issues than existing systems.

Systems and methods according to embodiments of the invention provide well-lit images, with no reflections from glasses/sunglasses, enabling accurate monitoring of people.

Systems and methods according to embodiments of the invention do not require high resolution imaging and can operate at long distances, with flexible image sensor and illumination positioning. Thus, systems and methods according to embodiments of the invention can be used to monitor multiple people in a vehicle setting and for other purposes, as described herein.

### BRIEF DESCRIPTION OF THE DRAWINGS

The invention will now be described in relation to certain examples and embodiments with reference to the following illustrative drawing figures so that it may be more fully understood. In the drawings:
Figs. 1A- ID schematically illustrate methods for controlling imaging parameters based on visibility of an eye of a person in an image, according to embodiments of the invention;
Figs. 2A-2B schematically illustrate methods for determining visibility of an eye based on detection of glasses in an image, according to embodiments of the invention;
Fig. 3 schematically illustrates a method for determining visibility of an eye based on illuminance of the space, according to an embodiment of the invention;
Fig. 4 schematically illustrates a method for monitoring a plurality of people in a space, according to embodiments of the invention;
Fig. 5 schematically illustrates a method for differentially applying monitoring algorithms, according to embodiments of the invention; and
Fig. 6 schematically illustrates a system operable according to embodiments of the invention.

### DETAILED DESCRIPTION

Embodiments of the invention provide systems and methods for monitoring one or a plurality of people in an enclosed space, such as a vehicle cabin.

The term "user" may refer to any person monitored according to embodiments of the invention.

A user may be monitored to determine the user's direction of gaze and/or to determine a general state of a user. The user's direction of gaze or general state of the user (e.g., the level of distraction of the user) can be indicative of a physiological or psychological condition of the user, such as illness, drowsiness, fatigue, anxiety, sobriety, inattentive blindness and readiness to take control of a machine (e.g., vehicle). The user's intention, while operating a machine, can also be deduced from monitoring the user, e.g., based on direction of gaze of the user's eyes.

Monitoring a person can include tracking the person throughout images of the space and/or using image processing techniques to determine the state of the person from the images of the space. Tracking of the head or face of a person, e.g., to detect head and/or eye movement, may be done by applying optical flow methods, histogram of gradients, deep neural networks or other appropriate detection and tracking methods. Other body parts may be tracked using similar optical flow methods.

The state of the person may sometimes be determined by running computer vision algorithms (e.g., face detection and/or eye detection algorithms) including machine learning and deep learning processes, to extract biometrics of the person. A human's head or face may be tracked in a set of images of the person and biometric parameters of the human can be extracted based on the tracking. In one embodiment biometric parameter values of a specific human obtained from a first set of images are used to represent the baseline or normal state of the human and may thus be used as a reference frame for biometric parameter values of that same human obtained from a second, later captured, set of images.

People and body parts of people (e.g., limbs) may be detected by using object detection and/or motion detection and/or color detection algorithms. Also, machine learning models, such as support vector machines, may be used to detect humans and body parts of humans.

Parameters such as direction of gaze or posture or position of a person's head may be determined by applying appropriate algorithms (and/or combination of algorithms) on image data, such as motion detection algorithms, color detection algorithms, detection of landmarks, 3D alignment, gradient detection, support vector machine, color channel separation and calculations, frequency domain algorithms and shape detection algorithms.

Combinations of the above and similar techniques can be applied on images of one or more people in a space, in order to provide a monitoring algorithm, according to embodiments of the invention. Possibly, different monitoring algorithms can be applied in different instances, as further explained below.

In the following description, various aspects of the invention will be described. For purposes of explanation, specific configurations and details are set forth in order to provide a thorough understanding of the invention. However, it will also be apparent to one skilled in the art that the invention may be practiced without the specific details presented herein. Furthermore, well known features may be omitted or simplified in order not to obscure the invention.

Unless specifically stated otherwise, as apparent from the following discussions, it is appreciated that throughout the specification discussions utilizing terms such as "processing," "computing," "calculating," "determining," "detecting", "identifying", "extracting", "obtaining", "applying", or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

In one embodiment of the invention a system for monitoring a person includes a camera having an image sensor that can collect both visible and IR light. The camera can capture an image of a space which includes one or more people. A processor can determine visibility conditions from the image of the space and may control a device (such as the camera and/or illumination source) based on the determined visibility conditions. Typically, "visibility conditions" relate to conditions which enable detecting an eye of the person (or people) in the image. In some embodiments the visibility conditions enable detecting direction of gaze of the eye of the person (or people).

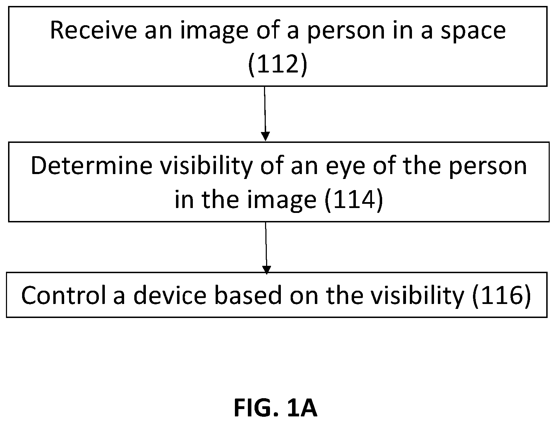

In one embodiment, which is schematically illustrated in Fig. 1A, a method for monitoring a person in a space can be carried out by a processor. The method includes obtaining an image of at least part of a person in a space (112). In one embodiment the image includes an eye of the person.

The processor then determines visibility of the eye of the person in the image, relative to a predetermined threshold (114) and controls a device based on the visibility of the eye relative to the predetermined threshold (116).

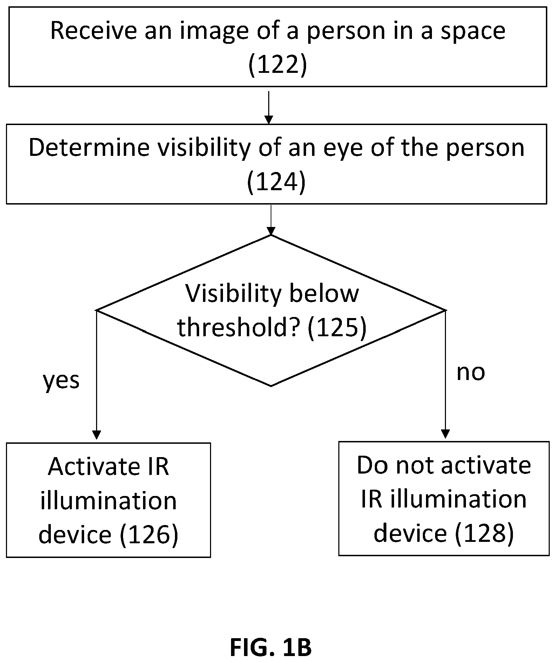

In one example, the device may be an illumination device and the processor controls the illumination device to illuminate at an intensity or wavelength, based on the visibility of the eye relative to the predetermined threshold. For example, as schematically illustrated in Fig. 1B, an image of a person in the space is obtained (122) and the visibility of the eye of the person in the image, relative to a predetermined threshold, is determined (124). If the visibility is below the threshold (125) then an illumination device (which may be an IR illumination device) is activated (126). If the visibility is above the threshold then the illumination device is not activated (128).

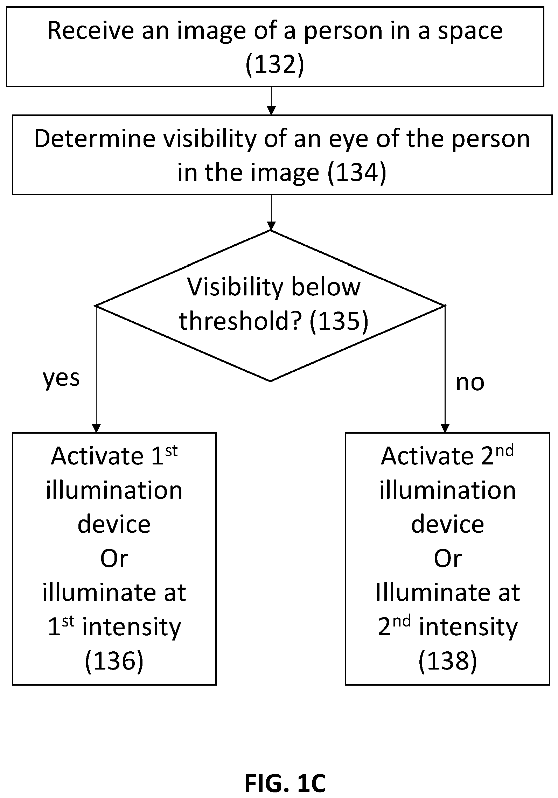

In another example, which is schematically illustrated in Fig. 1C, an image of a person in the space is obtained (132) and the visibility of the eye of the person in the image, relative to a predetermined threshold, is determined (134). If the visibility is below the threshold (135) then a first illumination device is activated (136) and/or a first intensity and/or wavelength of illumination is activated. If the visibility of the eye is above the threshold then a second illumination device is activated (138) and/or a second intensity and/or wavelength of illumination is activated.

In one example, the illumination device is an IR illumination device, e.g., as described below. A processor may activate an IR illumination device when the visibility of the eye is below a threshold. This embodiment, among others, enables use of an illumination source (e.g., IR illumination source) only in low illumination conditions and/or low visibility conditions. The illumination source is not activated in high illumination and/or visibility conditions, thereby providing a safe to use and cost-effective solution.

In other examples the processor controls (one or more) illumination device to illuminate a first illumination (e.g., a first wavelength, e.g., IR illumination) if visibility of the eye is below the predetermined threshold and to illuminate a second illumination (e.g., a second wavelength, e.g., visible light) if visibility of the eye is above the predetermined threshold. The first and second illuminations may be different intensities of illumination, such that the processor changes intensity of illumination of one or more illumination device(s) based on visibility of the eye in an image.

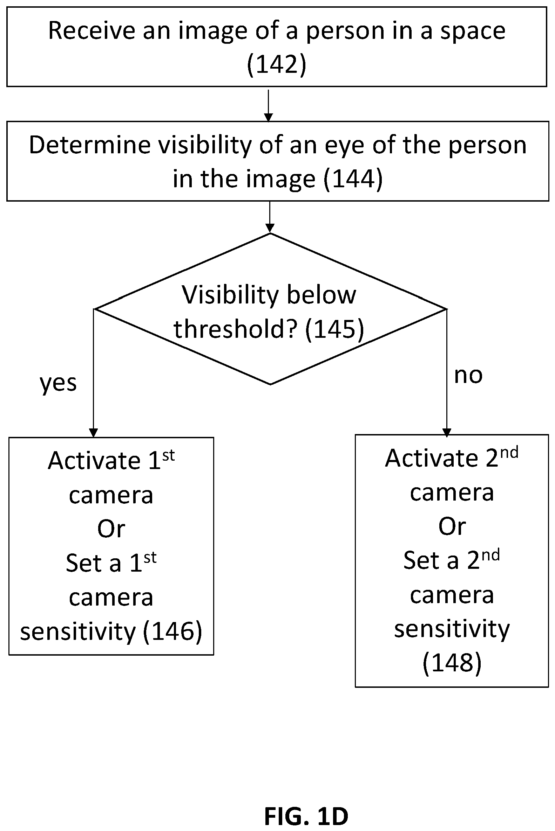

In another example, which is schematically illustrated in Fig. 1D, the device controlled by the processor is a camera configured to capture the image of the person (or people) in the space. In this embodiment, an image of a person in the space is obtained (142) and the visibility of the eye of the person in the image, relative to a predetermined threshold, is determined (144). If the visibility is below the threshold (145) then a first camera is controlled to capture an image (146) and/or a sensitivity of the camera is set at a first sensitivity. If the visibility is above the threshold (145) then a second camera is controlled to capture an image (138) and/or the sensitivity of the camera may be set at a second sensitivity. Thus, the sensitivity of a camera may be controlled based on the visibility of the eye relative to a predetermined threshold.

In some embodiments, devices at different locations in the space can be controlled based on the visibility of the eye relative to a predetermined threshold. For example, the first and second illumination source or first or second camera may be illumination sources or cameras located at different locations or positions within the space and/or may be directed in different angles.

As described above, a processor may control imaging parameters (e.g., illumination and/or camera sensitivity) based on visibility of an eye.

Visibility of the eye is a measure that may be dependent on parameters of the image which includes the eye. For example, parameters of an image that may affect visibility of an eye, include the amount of pixels corresponding to the eye and/or the pixel values of the pixels corresponding to the eye. In these cases, the predetermined threshold may be a predetermined number of pixels (which may include an average or percentage or other statistical representation) and/or a predetermined value. Visibility of the eye may be calculated from one or a combination of parameters of the image of the eye.

Thus, in one embodiment, a processor may detect a human face and/or eye in an image (e.g., by using known methods, such as Open CV face detection) and may then determine which pixels correspond to the eye (e.g., by using segmentation methods) to determine if the number and/or value of the pixels corresponding to the eye is below the predetermined threshold.

Parameters of an image, which may affect visibility of the eye, may be influenced by the environment, such as by the wavelength or intensity of ambient light. In other cases, visibility of the eye may be affected by actions of the person being imaged, for example, when a person moves his face away from the illumination source and/or from the camera. In this case, the processor may detect, for example, an area in the face that is less visible and may control an illumination device and/or camera which are located at an appropriate location and/or angle within the space to enable illuminating the less visible area and/or capturing an image of the less visible area, to provide another image of the person and to increase the visibility of the person's eye.

Typically, the processor has access to location and/or positioning information of the illumination devices and/or cameras. Location and/or positioning information may include real-world coordinates or other location marks within the space or information regarding locations and/or angles of the camera relative to the illumination device or to another location reference. Such information may be input by a user or may be calculated, e.g., based on prior calibration or by using image processing techniques to determine distances of objects within images.

The processor may also determine location and/or positioning information of the person within the space (and/or in relation to the illumination devices and/or cameras), e.g., by user input and/or by applying image processing techniques to determine locations of objects within images. The processor may then use the location and/or positioning information of the person and the location and/or positioning information of the illumination devices and/or cameras to calculate which illumination device and/or camera (located at known or calculated locations) are appropriate to enable illuminating less visible areas.

In another example a person may put an accessory, such as glasses (e.g., sunglasses) over his eyes, thereby lowering visibility of his eyes.

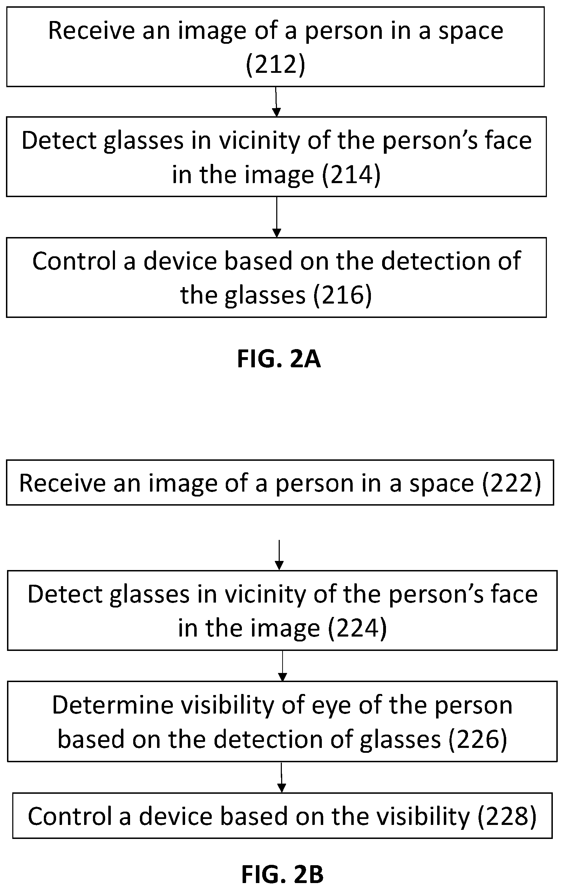

In one embodiment, which is schematically illustrated in Fig. 2A, a processor receives an image of a person in a space (212) and detects in the image, glasses (e.g., sunglasses) in vicinity of the person's face (214). The detection of glasses in the image (especially in vicinity of the person's face) may indicate that the person is about wear or is wearing glasses, which might lower the visibility of the person's eye. The processor may then control a device based on the detection of glasses (e.g., sunglasses) in vicinity of the person's face, in the image (216).

In one embodiment, the device is an IR illumination device (e.g., a LED or other light source illuminating within the infra-red and near infra-red wavelength range (referred to as IR), for example, 850nm or 940nm or within this range). In this embodiment a processor obtains an image of at least a face of a person and detects, in the image, an accessory, such as sunglasses in vicinity of the face of the person. The processor may then operate the IR illumination device based on detection, in the image, of the sunglasses in vicinity of the face of the person.

In one embodiment the processor is configured to turn on/off the IR illumination device, based on the detection of the sunglasses. Thus, IR illumination may be turned on when sunglasses are detected in the image and turned off when sunglasses are not detected in the image. In another embodiment the processor can turn on/off the IR illumination device based on the detection of the sunglasses and based on a location and/or positioning of the IR illumination device in the space. For example, the processor may turn on an IR illumination device that is located within the space at a location and/or angle that enables illuminating the person's face (when sunglasses are detected in the image), whereas the processor can turn off an IR illumination device that is located at a location and/or angle within the space that will not enable illuminating the person's face. The processor may determine which location and/or positioning of which illumination device enables illuminating the person's face, e.g., as described above.

In another embodiment the processor is configured to change intensity of illumination of the IR illumination device, based on the detection of the sunglasses, typically increasing intensity when sunglasses are detected in the image.

In an embodiment, which is schematically illustrated in Fig. 2B, a processor receives an image of a person in a space (222) and detects in the image, an accessory such as glasses (e.g., sunglasses) in vicinity of the person's face (224). The processor may determine visibility of the eye in the image, based on the detection of the accessory (e.g., sunglasses) in the image (226) and may control a device based on the determined visibility of the eye (228).

For example, the processor may determine that the visibility of the eye is below a predetermined threshold when sunglasses are detected in vicinity of the person's face in an image, and may control a camera and/or illumination device to create imaging parameters which will increase visibility of the eye. For example, a specific IR illumination intensity may be used if sunglasses are detected, so as to penetrate the sunglasses to be able to obtain data regarding pixels associated with the eyes. In other embodiments, different IR illumination intensities may be used, until the eyes are clearly visible for processing.

Accessories such as sunglasses may be detected based on their shape and/or color, using appropriate object detection algorithms. In some embodiments, glasses may be detected in vicinity of a person's face when there is an overlap between a detected face and an object determined to be glasses. In other embodiments, glasses are determined to be in vicinity of a person's face when an object determined to be glasses is located in an area of the eyes within a detected face. Other methods of determining vicinity of accessories to a person's face in an image, may be used.

In some embodiments, a processor detects the illuminance (e.g., by determining lux) in the space and determines the visibility of the eye relative to a predetermined threshold, based on the illuminance in the space.

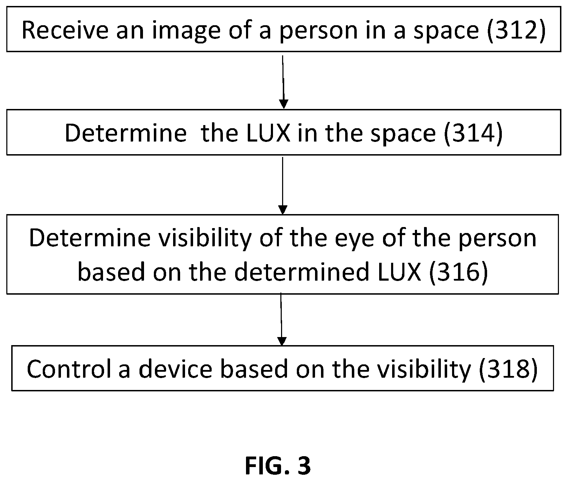

In the example schematically illustrated in Fig. 3, an image of a person in a space is received (312) and the illuminance in the space is determined (314). Visibility of the persons eye is then determined based on the illuminance in the space (316) and a device is controlled based on the determined visibility (318).

In some embodiments illuminance under a predetermined value may indicate that visibility of the eye is below a predetermined threshold, and an illumination source can be controlled to illuminate at an intensity to increase illuminance in the space to a minimal illuminance required to enable visibility of the person's eye above the predetermined threshold.

In one embodiment a processor can turn on/off an IR illumination device, based on visibility of the eye. Typically, the processor will turn on the IR illumination device when illuminance in the space is low (e.g., at night) and will turn off the IR illumination device when illuminance is high. In some embodiments a processor can change intensity of illumination of the IR illumination device, based on visibility of the eye. Typically, the intensity of illumination will be increased in low illuminance conditions and will be decreased in high illuminance conditions.

Illuminance in the space can be calculated, for example, by applying image analysis algorithms on the image to determine the intensity of the image and taking into account specifications of the camera capturing the image (e.g., shutter opening time, sensitivity of the sensor, etc.).

In other embodiments detecting illuminance in the space can include receiving data from a lux meter, as further detailed below.

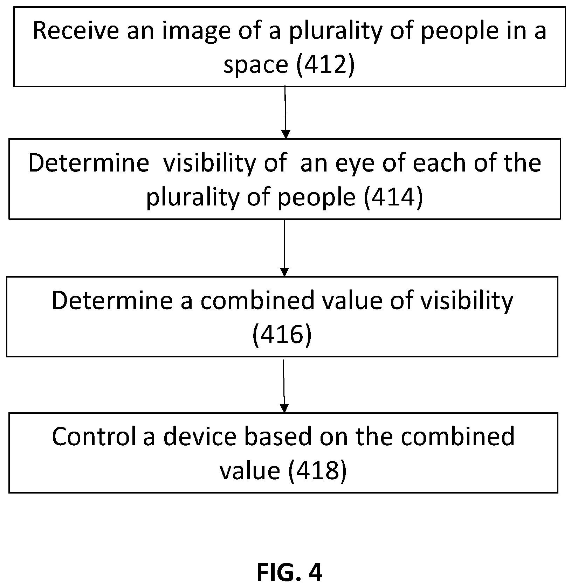

In an embodiment, which is schematically illustrated in Fig. 4, multiple people can be monitored in a single space, from one or more images. In this embodiment, an image of a plurality of people is obtained (412) and the visibility of the eye of at least some of the plurality of people, is determined (414), e.g., as described herein. A combined value of visibility can be calculated based on the visibility of the eye of each person (416) and a device may be controlled based on the combined value of visibility (418).

The combined value may be calculated, for example, by assigning a weight to the visibility of the eye of each person (e.g., based on location of the person within the space) and adding the weighted visibility values. For example, if it is desired to monitor people located at a rear of a vehicle cabin, the visibility of eye of each person can be assigned a higher weight if the person is determined to be located at the rear, than if the person is determined to be located in the front of the cabin. The combined value of visibility for people at the rear of the cabin will thus be higher, causing higher illumination of the rear and possibly activation of cameras located and/or positioned so as to capture the eyes of people at the rear of the cabin with increased visibility. Thus, according to embodiments if the invention, differently located illumination devices and/or different illumination conditions and/or differently located cameras and/or different sensitivities of cameras may be used to obtain an image which provides the highest visibility of eyes of a desired group of people. In other embodiments, different images may be obtained, each of the images captured in different illumination conditions and/or using different cameras, each of the images showing a highest visibility of a different person or group of people in the space.

For example, it may be advantageous to know in which direction a group of people are looking. E.g., if all passengers in a vehicle cabin, are looking in the same direction, this could assist in understanding the scene and conditions in the vehicle cabin.

In one embodiment, different types of people can be monitored in a space, thereby providing better understanding of the scene in the space. In one embodiment, a system for monitoring a space includes a camera to capture an image of the space and a processor to detect first and second person types in the image of the space. The processor can apply a first monitoring algorithm on the first person type and a second monitoring algorithm on the second person type and may output a status of the space based on results of the first monitoring algorithm and the second monitoring algorithm.

The status of the space may include information regarding behavior of the people in the space (e.g., compliance with rules, peaceful/violent behavior, etc.) or information regarding the mood of people in the space or other information regarding the people being monitored in the space.

Different person types include a driver and passengers in a vehicle. The processor may detect the first person type and the second person type based on, for example, the location of the first person type and second person type in the space. E.g., a driver in a vehicle will typically be located at the front of the vehicle while the passengers will be located in other places in the cabin. Alternatively, or in addition, the processor can detect the first person type and the second person type based on appearance of the first person type and second person type in the image of space. E.g., a driver may be wearing a uniform and can thus be detected based on the different colors of his uniform and/or shape of his hat, etc.

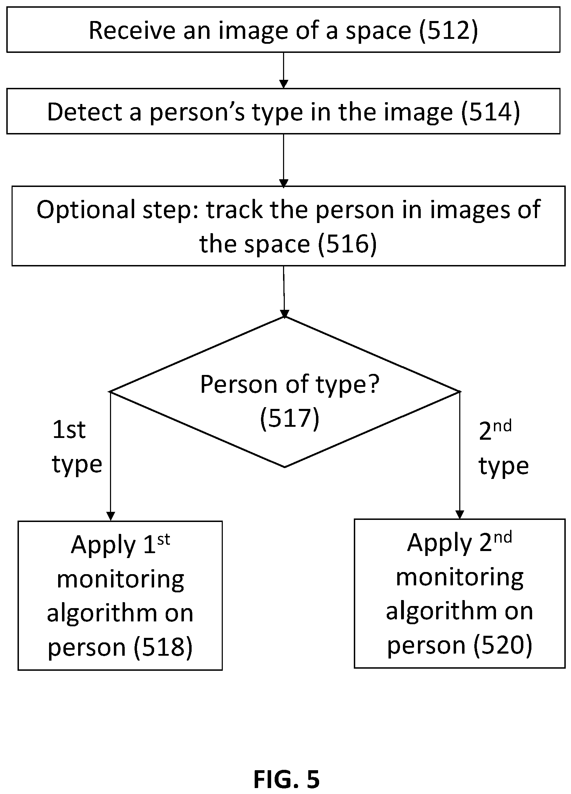

In one embodiment, which is schematically illustrated in Fig. 5, an image of a space containing a plurality of people is, obtained (512). A type of one of the plurality of people is then determined (514), e.g., by using image processing as described above. A specific monitoring algorithm may be applied to the person based on the type of the person. If the person is of a first type (517) then a first monitoring algorithm is applied on the person (518) and if the person is of a second type (517) then a second monitoring algorithm is applied on the person (520). Optionally, the person may be tracked throughout images of the space (516) prior to determining the person's type. In some embodiments, the person's type can be determined based on the tracking.

The first and second monitoring algorithms may differ in the specific techniques and/or in the order of steps performed to monitor the person. For example, a driver can be monitored using a monitoring algorithm that determines the driver's awareness (e.g., by monitoring eye blinks) whereas the passengers may be monitored using a monitoring algorithm that determined the passengers' mood (detecting smiles, yawns, etc.).

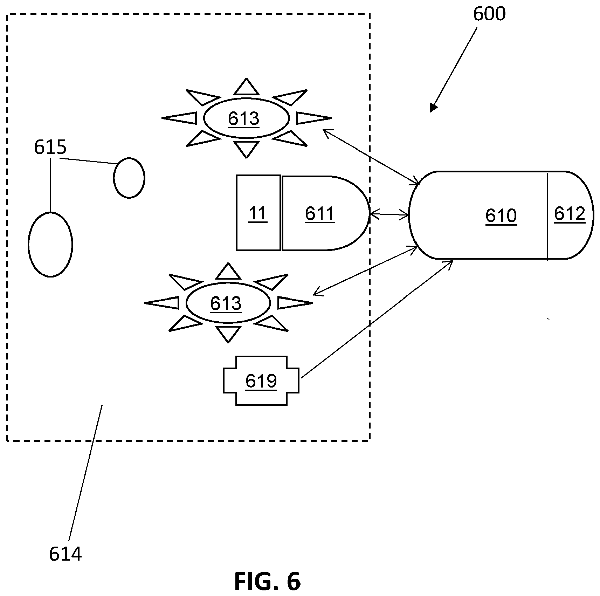

Fig. 6 schematically illustrates a system operable according to embodiments of the invention. The system 600 includes one or more a camera(s) 611. The camera 611 may be located at any location and/or angle in the space 614 to enable a field of view (FOV) that includes at least part of one or more person 615. For example, camera 611 may be located and/or positioned so as to capture the person's 615 eyes or mouth or of another body part of the person, e.g., limbs of the person. For example, one or more cameras 611 may be positioned on a car's windshield, on the sun visor of the car, on the dashboard, on the A- pillar, in the instruments cluster, on the front mirror of the car, on a steering wheel of a vehicle or front window of a vehicle such as a car, aircraft, ship, etc. Similarly, one or more cameras 611 may be placed at any location in another space 614, e.g., a home, workplace, clinic or other environment to enable obtaining image data of at least part of a person. The space 614 is enclosed.

The camera 611 typically includes a CCD or CMOS or other appropriate image sensor. The camera 611 may be part of a 2D or 3D camera, for example, part of a standard camera provided with mobile devices such as smart phones or tablets. In one embodiment several image sensors may be used to obtain a 3D or stereoscopic image of person 615. In one embodiment camera 611 obtains images at a high frame rate (e.g., 30 frames per second or higher) to achieve real-time imaging.

In some embodiments, camera 611 includes an image sensor capable of capturing a plurality of illumination wavelengths, e.g., capable of capturing both IR and visible light. Camera 611 may include a bandpass filter 11 that enables visible light to pass, optionally together with a bandpass around near infrared light (e.g. 850nm or 940nm).

In some embodiments the system 600 includes one or more illumination sources 613 such as an infra-red or near infra-red (also referred to as IR) illumination source (e.g., an LED illuminating at 850nm or 940nm). The use of an IR illumination source enables obtaining image data of the space even in low lighting conditions, e.g., at night, and when visibility of a person's eye is low.

Typically, both illumination source 613 and camera 611 are in communication with a processor 610 and one or more memory unit(s) 612, and may transmit data to the processor 610 and/or be controlled by signals generated by the processor 610.

Processor 610 may also be in communication with an illuminance sensor such as lux meter 619, that can measure the illuminance in space 614, possibly in specific locations within space 614, e.g., in vicinity of the person 615 and/or in vicinity of the person's face or eyes. Data provided from the lux meter 619 can be used by processor 610 to calculate if illumination from illumination source 613 is below a threshold, and if so, processor 610 can control the illumination source 613 to illuminate at an intensity to bring the lux in the space 614 to a minimal illuminance required to enable visibility of the person's eye above a predetermined threshold.

Communication between components of the system 600 and/or external components (such lux meter 619 and devices that can be controlled according to embodiments of the invention) may be through wired or wireless connection. For example, the system 600 may include an internet connection.

Processor 610 may include, for example, one or more processors and may be a central processing unit (CPU), a digital signal processor (DSP), a Graphical Processing Unit (GPU), a microprocessor, a controller, a chip, a microchip, an integrated circuit (IC), or any other suitable multi-purpose or specific processor or controller.

In some embodiments processor 610 is a dedicated unit. In other embodiments processor 610 may be part of an already existing processor, such as a vehicle processor. For example, the processor 610 may be one core of a multi-core CPU already existing in a vehicle, such as in the vehicle IVI (In-Vehicle Infotainment) system, telematics box of the vehicle, domain controller or another processor associated with the vehicle.

Processor 610 may be locally embedded or remote, e.g., cloud-based.

Memory unit(s) 612 may include, for example, a random access memory (RAM), a dynamic RAM (DRAM), a flash memory, a volatile memory, a non-volatile memory, a cache memory, a buffer, a short term memory unit, a long term memory unit, or other suitable memory units or storage units.

According to some embodiments, image data may be stored in memory unit 612. Typically, memory unit 612 stores executable instructions that, when executed by the processor 610, facilitate performance of operations of the processor 610, as described herein.

In one embodiment the processor 610 determines visibility conditions in an image of the person 615 captured by camera 611. The processor 610 determines visibility conditions which enable detecting the eye of the person 15. Processor 610 may then control a device (such as camera 611, illumination source 613 or other devices) based on the visibility conditions.

In some embodiments the visibility conditions enable extracting biometric parameters from images captured by camera 611. Biometric parameters, which may be indicative of a person's state, include, inter alia, eye related parameters, such as, one or more eye pupil direction, pupil diameter, blink frequency, blink length and percentage of eyelid closed (perclos).

In other embodiments the visibility conditions enable detecting direction of gaze of the eye of the person 615.

System 600 enables running an existing computing system (e.g., as detailed above), which is not, however, equipped with IR illumination and other hardware that might be required for eye detection and/or gaze direction tracking. Another advantage of system 600 is that processor 610 can run separately from the camera 611 and/or illumination source 613 and can thus be applied to an already existing camera/illumination system and/or allows flexibility in choosing the camera and/or illumination source and in locating them within the space 614.

System 600 may be used for gaming purposes, e.g., when tracking a person's gaze direction is desired, and processor 610 may control functions of the gaming device. System 600 may be used for medical purposes and may control a medical device. System 600 may be used for security purposes, e.g., when viewing a person's eye is required and when communicating with a robot or personal assistant, e.g., when detecting a gaze direction of a person is useful. System 600 may be used in advertisements and for TVs and home appliances and in other applications where devices can be controlled based on a person's direction of gaze and/or based on biometric parameters of the person, e.g., eye related biometric parameters.

System 600 and the methods described above enable accurate face and eye tracking from a distance (e.g., ~40cm-~5mr) without requiring constant and high intensity IR illumination, thereby providing a cost-effective system with low power consumption, few heating issues and few safety issues for a user.

## Claims

1. A system for monitoring a vehicle cabin, the system comprising:
a camera (611) to capture an image of an enclosed space (614) of the vehicle cabin; and
a processor (610) configured to detect a driver (615) and a passenger (615) in the image of the space (614),
**characterized in that** the processor (610) is configured to:
apply a first monitoring algorithm (518) on the driver to determine a state of the driver and a second monitoring algorithm (520) on the passenger to determine a state of the passenger, wherein the state is indicative of a physiological or psychological condiction of the driver or passenger, and
output information regarding the driver and the passenger in the enclosed space (614) of the vehicle cabin based on results of the first monitoring algorithm and the second monitoring algorithm.

2. The system of claim 1 wherein the processor (610) is configured to detect the driver and passenger based on location of the driver and passenger in the enclosed space (614).

3. The system of claim 1 or 2 wherein the processor (610) is configured to detect the driver and the passenger based on appearance of the driver and the passenger in the image of the enclosed space (614).

4. The system of claim 1, 2 or 4, wherein the processor (610) is configured to detect the driver and the passenger based on tracking of the driver or passenger throughout images of the enclosed space (614).

5. The system of any one of claims 1 to 4 wherein the processor (610) is configured to track driver (615) and passenger (615) in images of the enclosed space (614), to determine a state of a tracked driver or passenger from the images of the enclosed space.

6. The system of claim 5 wherein the processor (610) is configured to:
extract a biometric parameter of the tracked driver (615) or passenger (615) from the images of the space (614), and
determine the state of the tracked driver or passenger based on the biometric parameter.

7. A method for monitoring a vehicle cabin, the method comprising:
obtaining an image of the enclosed space (614) of the vehicle cabin;
detecting a driver (615) and a passenger (615) in the image of the enclosed space (614), the method **characterised by**:
applying a first monitoring algorithm (518) to the driver to determine a state of the driver, and applying a second monitoring algorithm (520) to the passenger to determine a state of the passenger, wherein the state is indicative of a physiological or psychological condiction of the driver or passenger, and
outputting information regarding the driver and the passenger in the enclosed space of the vehicle cabin based on the results of the first monitoring algorithm and the second monitoring algorithm.

8. The method of claim 7, comprising using image processing of the image of the space (614), to detect the driver (615) and the passenger (615).

9. The method of claim 7 or 8, comprising determining the type of one of the plurality of people in the vehicle based on location of the one of the plurality of people in the space.

10. The method of any one of claims 7 to 10, comprising determining the type of one of the plurality of people in the vehicle based on appearance of the one of the plurality of people in the image of space.

11. The method of any one of claims 7 to 11, comprising determining the type of one of the plurality of people in the vehicle based on tracking the one of the plurality of people throughout images of the space.

12. The method of any one of claims 7 to 13 wherein the monitoring algorithm uses a specific technique which is dependent on whether it is being applied to the driver or the passenger.

## Patentansprüche

1. System zum Überwachen einer Fahrzeugkabine, wobei das System umfasst:
eine Kamera (611) zum Aufnehmen eines Bildes eines geschlossenen Raums (614) der Fahrzeugkabine; und einen Prozessor (610), welcher dazu konfiguriert ist, einen Fahrer (615) und einen Beifahrer (615) in dem Bild des Raums (614) zu erkennen,
**dadurch gekennzeichnet, dass** der Prozessor (610) dazu konfiguriert ist:
einen ersten Überwachungsalgorithmus (518) auf den Fahrer anzuwenden, um einen Zustand des Fahrers zu bestimmen, und einen zweiten Überwachungsalgorithmus (520) auf den Beifahrer anzuwenden, um einen Zustand des Beifahrers zu bestimmen, wobei der Zustand auf eine physiologische oder psychologische Verfassung des Fahrers oder Beifahrers hinweist, und
Informationen bezüglich des Fahrers und des Beifahrers in dem geschlossenen Raum (614) der Fahrzeugkabine basierend auf Ergebnissen des ersten Überwachungsalgorithmus und des zweiten Überwachungsalgorithmus auszugeben.

2. System nach Anspruch 1, wobei der Prozessor (610) dazu konfiguriert ist, den Fahrer und Beifahrer basierend auf der Position des Fahrers und Beifahrers in dem geschlossenen Raum (614) zu erkennen.

3. System nach Anspruch 1 oder 2, wobei der Prozessor (610) dazu konfiguriert ist, den Fahrer und den Beifahrer basierend auf Erscheinungsbild des Fahrers und des Beifahrers in dem Bild des geschlossenen Raums (614) zu erkennen.

4. System nach Anspruch 1, 2 oder 4, wobei der Prozessor (610) dazu konfiguriert ist, den Fahrer und den Beifahrer basierend auf Verfolgen des Fahrers oder Beifahrers durch Bilder des geschlossenen Raums (614) zu erkennen.

5. System nach einem der Ansprüche 1 bis 4, wobei der Prozessor (610) dazu konfiguriert ist, Fahrer (615) und Beifahrer (615) in Bildern des geschlossenen Raums (614) zu verfolgen, um einen Zustand eines verfolgten Fahrers oder Beifahrers aus den Bildern des geschlossenen Raums zu bestimmen.

6. System nach Anspruch 5, wobei der Prozessor (610) dazu konfiguriert ist:
einen biometrischen Parameter des verfolgten Fahrers (615) oder Beifahrers (615) aus den Bildern des Raums (614) zu extrahieren, und
den Zustand des verfolgten Fahrers oder Beifahrers basierend auf dem biometrischen Parameter zu bestimmen.

7. Verfahren zum Überwachen einer Fahrzeugkabine, wobei das Verfahren umfasst:
Erhalten eines Bildes des geschlossenen Raums (614) der Fahrzeugkabine;
Erkennen eines Fahrers (615) und eines Beifahrers (615) in dem Bild des geschlossenen Raums (614), wobei das Verfahren **gekennzeichnet ist durch**:
Anwenden eines ersten Überwachungsalgorithmus (518) auf den Fahrer, um einen Zustand des Fahrers zu bestimmen, und Anwenden eines zweiten Überwachungsalgorithmus (520) auf den Beifahrer, um einen Zustand des Beifahrers zu bestimmen, wobei der Zustand auf eine physiologische oder psychologische Verfassung des Fahrers oder Beifahrers hinweist, und
Ausgeben von Informationen bezüglich des Fahrers und des Beifahrers in dem geschlossenen Raum der Fahrzeugkabine basierend auf den Ergebnissen des ersten Überwachungsalgorithmus und des zweiten Überwachungsalgorithmus.

8. Verfahren nach Anspruch 7, umfassend Verwenden einer Bildverarbeitung des Bildes des Raums (614), um den Fahrer (615) und den Beifahrer (615) zu erkennen.

9. Verfahren nach Anspruch 7 oder 8, umfassend Bestimmen des Typs einer der Vielzahl von Personen in dem Fahrzeug basierend auf Standort der einen der Vielzahl von Personen in dem Raum.

10. Verfahren nach einem der Ansprüche 7 bis 10, umfassend Bestimmen des Typs einer der Vielzahl von Personen in dem Fahrzeug basierend auf Erscheinungsbild der einen der Vielzahl von Personen in dem Bild des Raums.

11. Verfahren nach einem der Ansprüche 7 bis 11, umfassend Bestimmen des Typs einer der Vielzahl von Personen in dem Fahrzeug basierend auf Verfolgen der einen der Vielzahl von Personen durch Bilder des Raums.

12. Verfahren nach einem der Ansprüche 7 bis 13, wobei der Überwachungsalgorithmus eine spezielle Technik verwendet, welche davon abhängt, ob sie auf den Fahrer oder den Beifahrer angewendet wird.

## Revendications

1. Système de surveillance d'un habitacle de véhicule, le système comprenant :
une caméra (611) pour capturer une image d'un espace clos (614) de l'habitacle de véhicule ; et un processeur (610) configuré pour détecter un conducteur (615) et un passager (615) dans l'image de l'espace (614),
**caractérisé en ce que** le processeur (610) est configuré pour :
appliquer un premier algorithme de surveillance (518) sur le conducteur pour déterminer un état du conducteur et un second algorithme de surveillance (520) sur le passager pour déterminer un état du passager, dans lequel l'état est indicatif d'une condition physiologique ou psychologique du conducteur ou du passager, et
délivrer en sortie des informations concernant le conducteur et le passager dans l'espace clos (614) de l'habitacle de véhicule sur la base des résultats du premier algorithme de surveillance et du second algorithme de surveillance.

2. Système selon la revendication 1, dans lequel le processeur (610) est configuré pour détecter le conducteur et le passager sur la base de l'emplacement du conducteur et du passager dans l'espace clos (614).

3. Système selon la revendication 1 ou 2, dans lequel le processeur (610) est configuré pour détecter le conducteur et le passager sur la base de l'apparence du conducteur et du passager dans l'image de l'espace clos (614).

4. Système selon la revendication 1, 2 ou 4, dans lequel le processeur (610) est configuré pour détecter le conducteur et le passager sur la base du suivi du conducteur ou du passager à travers des images de l'espace clos (614).

5. Système selon l'une quelconque des revendications 1 à 4, dans lequel le processeur (610) est configuré pour suivre le conducteur (615) et le passager (615) dans des images de l'espace clos (614), pour déterminer un état d'un conducteur ou d'un passager suivi à partir des images de l'espace clos.

6. Système selon la revendication 5, dans lequel le processeur (610) est configuré pour :
extraire un paramètre biométrique du conducteur (615) ou du passager (615) suivi à partir des images de l'espace (614), et
déterminer l'état du conducteur ou du passager suivi sur la base du paramètre biométrique.

7. Procédé de surveillance d'un habitacle de véhicule, le procédé comprenant :
l'obtention d'une image de l'espace clos (614) de l'habitacle de véhicule ;
la détection d'un conducteur (615) et d'un passager (615) dans l'image de l'espace clos (614), le procédé étant **caractérisé par** :
l'application d'un premier algorithme de surveillance (518) sur le conducteur pour déterminer un état du conducteur et l'application d'un second algorithme de surveillance (520) sur le passager pour déterminer un état du passager, dans lequel l'état est indicatif d'une condition physiologique ou psychologique du conducteur ou du passager, et
la délivrance en sortie d'informations concernant le conducteur et le passager dans l'espace clos de l'habitacle de véhicule sur la base des résultats du premier algorithme de surveillance et du second algorithme de surveillance.

8. Procédé selon la revendication 7, comprenant l'utilisation d'un traitement d'image de l'image de l'espace (614), pour détecter le conducteur (615) et le passager (615).

9. Procédé selon la revendication 7 ou 8, comprenant la détermination du type de l'une de la pluralité de personnes dans le véhicule sur la base de l'emplacement de l'une de la pluralité de personnes dans l'espace.

10. Procédé selon l'une quelconque des revendications 7 à 10, comprenant la détermination du type de l'une de la pluralité de personnes dans le véhicule sur la base de l'apparence de l'une de la pluralité de personnes dans l'image de l'espace.

11. Procédé selon l'une quelconque des revendications 7 à 11, comprenant la détermination du type de l'une de la pluralité de personnes dans le véhicule sur la base du suivi de l'une de la pluralité de personnes à travers des images de l'espace.

12. Procédé selon l'une quelconque des revendications 7 à 13, dans lequel l'algorithme de surveillance utilise une technique spécifique qui dépend du fait qu'il est appliqué au conducteur ou au passager.
